# EUROPÄISCHE PATENTSCHRIFT

(11) **EP 4 273 507 B1**
(45) Veröffentlichungstag und Bekanntmachung des Hinweises auf die Patenterteilung: **10.07.2024**
(21) Anmeldenummer: 22171709.3
(22) Anmeldetag: 05.05.2022
(51) Int. Cl.: G01D 5/20

(54) **ABTASTELEMENT UND INDUKTIVE POSITIONSMESSEINRICHTUNG MIT DIESEM ABTASTELEMENT**
SCANNING ELEMENT AND INDUCTIVE POSITION MEASURING DEVICE WITH THE SAME
ÉLÉMENT DE DÉTECTION ET DISPOSITIF INDUCTIF DE MESURE DE POSITION POURVU DUDIT ÉLÉMENT PALPEUR

(43) Veröffentlichungstag der Anmeldung: 08.11.2023
(73) Patentinhaber: Dr. Johannes Heidenhain GmbH, 83301 Traunreut (DE)
(72) Erfinder: SELL, Oliver, 83301 Traunreut (DE); HEUMANN, Martin, 83278 Traunstein (DE); TIEMANN, Marc Oliver, 83329 Waging am See (DE)

(56) Entgegenhaltungen:
- DE-A1- 10 320 990
- DE-A1- 102006 046 531
- DE-A1- 102017 219 931
- DE-A1- 19 751 853

## Beschreibung

### GEBIET DER TECHNIK

Die Erfindung betrifft ein Abtastelement für eine induktive Positionsmesseinrichtung gemäß dem Anspruch 1 zur Positionsbestimmung des Abtastelements relativ zu einem Skalenelement sowie eine Positionsmesseinrichtung mit einem derartigen Abtastelement.

Induktive Positionsmesseinrichtungen werden beispielsweise als Winkelmessgeräte zur Bestimmung der Winkelposition von relativ zueinander drehbaren Maschinenteilen verwendet. Bei induktiven Positionsmesseinrichtungen sind häufig Erregerspuren und Empfängerspuren etwa in Form von Leiterbahnen auf einer gemeinsamen meist mehrlagigen Leiterplatte aufgebracht, die beispielsweise mit einem Stator eines Winkelmessgeräts fest verbunden ist. Dieser Leiterplatte gegenüber befindet sich ein Skalenelement, auf dem Teilungsstrukturen aufgebracht sind, und welches mit dem Rotor des Winkelmessgeräts drehfest verbunden ist. Wenn an den Erregerleiterbahnen ein zeitlich wechselnder elektrischer Erregerstrom angelegt wird, werden in den Empfängerspulen während der Relativdrehung zwischen Rotor und Stator von der Winkelposition abhängige Signale erzeugt. Diese Signale werden dann in einer Auswerteelektronik weiterverarbeitet.

Häufig werden derartige induktive Winkelmesseinrichtungen als Messgeräte für elektrische Antriebe, zur Bestimmung der Relativbewegung beziehungsweise der Relativlage von entsprechenden Maschinenteilen eingesetzt. In diesem Fall werden die erzeugten Winkelpositionswerte einer Folgeelektronik zur Ansteuerung der Antriebe über eine entsprechende Schnittstellenanordnung zugeführt.

Ferner werden induktive Positionsmesseinrichtungen häufig auch zur direkten Messung von Längsverschiebungen entlang einer Achse verwendet. Dabei wird das gleiche Messprinzip angewendet wie bei den oben genannten Winkelmessgeräten, allerdings verlaufen dann die Empfängerspulen und die Teilungsstruktur entlang der geradlinigen Achse.

### STAND DER TECHNIK

Aus der EP 1 881 299 B1 ist eine Positionsmesseinrichtung bekannt, welche zwei Empfängerspuren aufweist, wobei Anschlussleitungen beidseitig der jeweiligen Empfängerspuren nach außen geführt werden.

In der EP 3 702 737 B1 der Anmelderin ist eine induktive Positionsmesseinrichtung mit zwei Empfängerspuren offenbart, wobei Anschlussleitungen durch eine Lücke der äußeren Empfängerspuren geführt werden.

DE 103 20 990 A1 und DE 197 51 853 A1 verwenden induktive Positionsmesseinrichtungen mit mehrlagigen Leiterplatten, um Überkreuzungen mit Anschlussleitungen zu vermeiden.

### ZUSAMMENFASSUNG DER ERFINDUNG

Der Erfindung liegt die Aufgabe zugrunde ein vergleichsweise genau arbeitendes, kompaktes und kostengünstig herstellbares Abtastelement für eine induktive Positionsmesseinrichtung zu schaffen.

Diese Aufgabe wird erfindungsgemäß durch die Merkmale des Anspruches 1 gelöst.

Das Abtastelement, welches für eine induktive Positionsmesseinrichtung zur Messung einer Position entlang einer Messrichtung geeignet und bestimmt ist, umfasst eine Leiterplatte, die eine erste Lage und eine zweite Lage aufweist. Zudem weist die Leiterplatte eine erste Empfängerspur auf, die zumindest eine erste Empfängerleiterbahn umfasst und zumindest eine Anschlussleitung, welche einen ersten Leiterzug und einen zweiten Leiterzug umfasst. Die Anschlussleitung kreuzt beziehungsweise durchquert die erste Empfängerspur. Weiterhin weist die Leiterplatte eine zweite Empfängerspur auf, die zumindest eine zweite Empfängerleiterbahn umfasst. Der erste Leiterzug ist an einem (ersten) Punkt mit der zweiten Empfängerleiterbahn elektrisch verbunden und der zweite Leiterzug ist an einem anderen (zweiten) Punkt mit der zweiten Empfängerleiterbahn elektrisch verbunden, so dass ein Signal, das durch die zweite Empfängerleiterbahn empfangen wurde, mit Hilfe der Leiterzüge abgreifbar ist. Alternativ oder ergänzend weist die Leiterplatte eine erste Erregerleiterbahn auf, wobei der erste Leiterzug an einem (dritten) Punkt mit der ersten Erregerleiterbahn elektrisch verbunden ist und der zweite Leiterzug an einem anderen (vierten) Punkt mit der ersten Erregerleiterbahn elektrisch verbunden ist, so dass über den ersten Leiterzug und über den zweiten Leiterzug ein Erregerstrom in die erste Erregerleiterbahn einleitbar ist. Der erste Leiterzug und der zweite Leiterzug verlaufen so, dass in zumindest einem ersten Abschnitt der Anschlussleitung der erste Leiterzug in positiver Messrichtung versetzt zum zweiten Leiterzug angeordnet ist und in zumindest einem zweiten Abschnitt der Anschlussleitung der zweite Leiterzug in positiver Messrichtung versetzt zum ersten Leiterzug angeordnet ist.

Die Messrichtung kann eine lineare Richtung oder eine Umfangsrichtung beziehungsweise eine Tangentialrichtung sein. Als positive Messrichtung kann bei einer linearen Messung beispielsweise eine Richtung (relative Verschiebung) nach links verstanden werden und demnach kann als negative Messrichtung die Richtung nach rechts gesehen werden. Bei einer Messung einer Winkelposition, also in Umfangsrichtung, kann beispielsweise als die positive Messrichtung eine Messrichtung in Richtung des Uhrzeigersinns und als negative Messrichtung eine Messrichtung in Richtung entgegen des Uhrzeigersinns definiert werden. Insbesondere verläuft die erste Erregerleiterbahn entlang der Umfangsrichtung beziehungsweise entlang der Messrichtung.

Mit Vorteil verlaufen die erste Empfängerspur und die zweite Empfängerspur entlang der Umfangsrichtung beziehungsweise entlang der Messrichtung wie auch die erste Erregerleiterbahn.

In weiterer Ausgestaltung der Erfindung befinden sich der (erste) Punkt, an dem der erste Leiterzug mit der zweiten Empfängerleiterbahn elektrisch verbunden ist, in der ersten Lage und der andere (zweite) Punkt, an dem der zweite Leiterzug mit der zweiten Empfängerleiterbahn elektrisch verbunden ist, in der zweiten Lage der Leiterplatte. Alternativ oder ergänzend befinden sich der (dritte) Punkt, an dem der erste Leiterzug mit der ersten Erregerleiterbahn elektrisch verbunden ist, in der ersten Lage und der andere (vierte) Punkt, an dem der zweite Leiterzug mit der ersten Erregerleiterbahn elektrisch verbunden ist, in der zweiten Lage.

In vorteilhafter Ausgestaltung der Erfindung verlaufen streckenweise im ersten Abschnitt die erste Empfängerleiterbahn und der erste oder der zweite Leiterzug parallel zueinander in derselben Lage der Leiterplatte. Alternativ oder ergänzend verlaufen streckenweise im zweiten Abschnitt die erste Empfängerleiterbahn und der erste oder der zweite Leiterzug parallel zueinander in derselben Lage der Leiterplatte.

Mit Vorteil sind in zumindest einem dritten Abschnitt der Anschlussleitung der erste Leiterzug in der ersten Lage und der zweite Leiterzug in der zweiten Lage übereinander verlaufend angeordnet. Der Begriff übereinander ist so zu verstehen, dass die Leiterzüge in einer Richtung orthogonal zur Leiterplatte übereinander mit parallelem Verlauf angeordnet sind.

In weiterer Ausgestaltung der Erfindung verlaufen im ersten Abschnitt und / oder im zweiten Abschnitt der erste Leiterzug und der zweite Leiterzug streckenweise zueinander parallel. In diesem Fall kann die erste Empfängerleiterbahn insbesondere mittig zwischen den parallel verlaufenden ersten und zweiten Leiterzügen in derselben Lage wie die Leiterzüge verlaufen.

Mit Vorteil wechseln der Verlauf des ersten Leiterzugs und der Verlauf des zweiten Leiterzugs im ersten Abschnitt und / oder im zweiten Abschnitt von der ersten Lage auf die zweite Lage.

In vorteilhafter Ausgestaltung der Erfindung verläuft der erste Leiterzug im ersten Abschnitt entlang einer Teilstrecke in der ersten Lage und die erste Empfängerleiterbahn verläuft in diesem Bereich ebenfalls in der ersten Lage. In dieser Teilstrecke verläuft der erste Leiterzug parallel zur ersten Empfängerleiterbahn. Optional umfasst die erste Empfängerspur eine weitere erste Empfängerleiterbahn, die im ersten Abschnitt in der zweiten Lage verläuft, wobei der erste Leiterzug die weitere erste Empfängerleiterbahn in der Teilstrecke kreuzt.

Als Lage der Leiterplatte ist hier, wie in der Leiterplattentechnologie üblich, eine elektrisch leitende Lage beziehungsweise Schicht zu verstehen. Die Leiterplatte kann als eine starre Leiterplatte mit beispielsweise einem FR4-Kern ausgestaltet sein. Alternativ kann die Leiterplatte als eine dünne Flexleiterplatte beziehungsweise Leiterfolie z. B. auf Basis von Polyimid-Folien ausgestaltet sein. Die Leiterplatte kann eine Dicke von weniger als 1 mm, mit Vorteil weniger als 500µm, insbesondere weniger als 200 µm aufweisen. Gerade bei einer geringen Dicke der Leiterplatte kann es vorteilhaft sein, wenn diese auf einem vergleichsweise starken Metallsubstrat aufgebracht ist.

Mit Vorteil ist die erste Erregerleiterbahn mit einem Erregerstrom bestrombar, welcher üblicherweise eine zeitlich wechselnde Stromstärke aufweist (Wechselstrom oder Mischstrom). Der Erregerstrom ist mit Hilfe elektronischer Bauteile generierbar, das heißt, dass dessen Verlauf von den elektronischen Bauteilen formbar ist. Nachdem ein physikalischer Zusammenhang zwischen der Stromstärke und der Spannungsstärke existiert, kann natürlich die gleiche Betrachtung auch für die Erregerspannung vorgenommen werden. Die elektronischen Bauteile können auf der Leiterplatte montiert sein. In weiterer Ausgestaltung der Erfindung sind diejenigen Signale, die von der ersten Empfängerspur und der zweiten Empfängerspur erzeugbar sind, mit Hilfe der elektronischen Bauteile, die insbesondere eine Auswerteschaltung bilden, weiterverarbeitbar.

Die elektronischen Bauteile können also Elemente verschiedener elektronischer Schaltungen sein beziehungsweise unterschiedlichen Schaltungen zugeordnet sein. Beispielsweise können bestimmte elektronische Bauteile Elemente der Schaltung zur Generierung eines Erregerstroms sein oder weitere elektronische Bauteile können Elemente einer weiteren Schaltung zur Auswertung beziehungsweise Weiterverarbeitung von Signalen sein.

In weiterer Ausgestaltung der Erfindung weist die Leiterplatte genau zwei Lagen auf. Insbesondere kann das Abtastelement ein Substrat aufweisen, auf dem die Leiterplatte angeordnet beziehungsweise aufgebracht ist.

Mit Vorteil ist das Substrat aus einem metallischen Werkstoff hergestellt, insbesondere als ein Blech ausgestaltet. Beispielsweise kann das Substrat aus einem weichmagnetischen Werkstoff hergestellt sein.

In vorteilhafter Ausgestaltung der Erfindung sind die erste Empfängerspur und die zweite Empfängerspur um eine Achse gekrümmt angeordnet, wobei die erste Empfängerspur bezüglich der Achse radial außen relativ zur zweiten Empfängerspur angeordnet ist. Ein derartiges Abtastelement dient insbesondere zur Bestimmung einer Winkelposition. Insbesondere können die erste Empfängerspur und die zweite Empfängerspur lückenlos über 360° um die Achse umlaufend angeordnet und ausgestaltet sein.

Gemäß einem weiteren Aspekt umfasst die Erfindung auch eine induktive Positionsmesseinrichtung mit dem Abtastelement sowie einem Skalenelement, wobei das Skalenelement in einer Richtung, die orthogonal zur Messrichtung orientiert ist, beabstandet zur Leiterplatte angeordnet ist.

Vorteilhafte Ausbildungen der Erfindung entnimmt man den abhängigen Ansprüchen.

Weitere Einzelheiten und Vorteile des erfindungsgemäßen Abtastelements ergeben sich aus der nachfolgenden Beschreibung zweier Ausführungsbeispiele anhand der beiliegenden Figuren.

### KURZE BESCHREIBUNG DER ZEICHNUNGEN

- Figur 1: eine Draufsicht auf eine Seite eines Abtastelements,
- Figur 2: eine Draufsicht auf eine Seite eines Skalenelements,
- Figur 3: eine Teilschnitt-Ansicht des Abtastelements,
- Figur 4: eine Detailansicht auf das Abtastelement mit Anschlussleitungen,
- Figur 5: eine Detailansicht auf eine der Anschlussleitungen,
- Figur 6: eine Detailansicht auf eine andere Anschlussleitung,
- Figur 7: eine räumliche Ansicht auf ein Detail der Anschlussleitung,
- Figur 8: eine Detailansicht auf das Abtastelement mit Anschlussleitung gemäß einem zweiten Ausführungsbeispiel,
- Figur 9: eine Detailansicht auf die Anschlussleitung, gemäß dem zweiten Ausführungsbeispiel.

### BESCHREIBUNG DER AUSFÜHRUNGSFORMEN

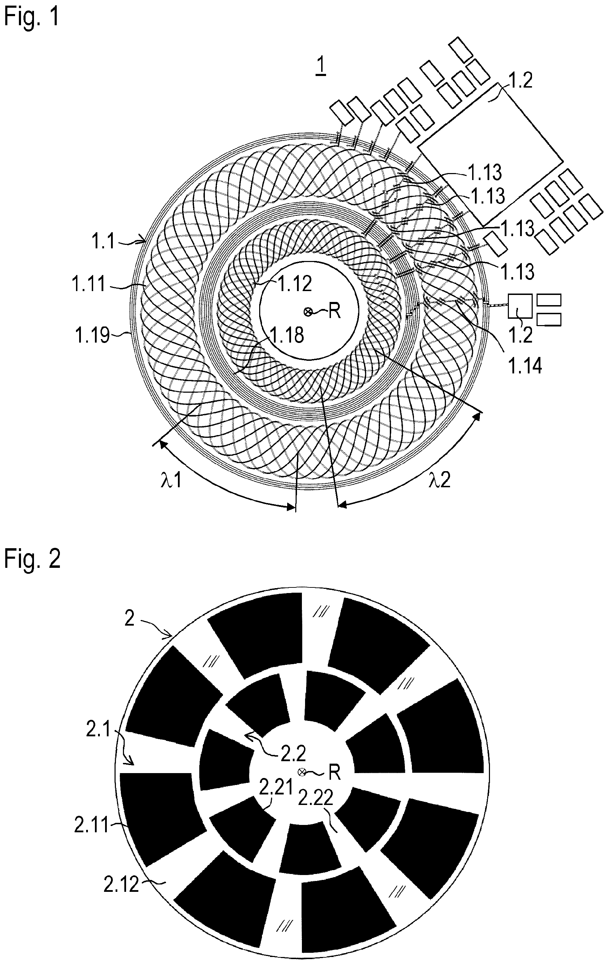

Die Erfindung wird gemäß den Figuren 1 und 2 anhand einer Positionsmesseinrichtung beschrieben, welche ein Abtastelement 1 aufweist, das zur Erfassung einer Winkelposition relativ zu einem Skalenelement 2 verwendet werden kann. Das Skalenelement 2 ist im zusammengebauten Zustand der Positionsmesseinrichtung um eine Achse R relativ zum Abtastelement 1 drehbar angeordnet. Die Achse R ist in den Figuren 1 und 2 orthogonal zur Zeichenebene orientiert. Durch die Positionsmesseinrichtung kann die Position in Messrichtung U (hier in Umfangsrichtung), also eine Winkelposition, bestimmt werden, wobei hier zwischen einer positiven Messrichtung U+, welche im Uhrzeigersinn orientiert ist, und einer negativen Messrichtung U-, die gegen den Uhrzeigersinn orientiert ist, unterschieden werden kann.

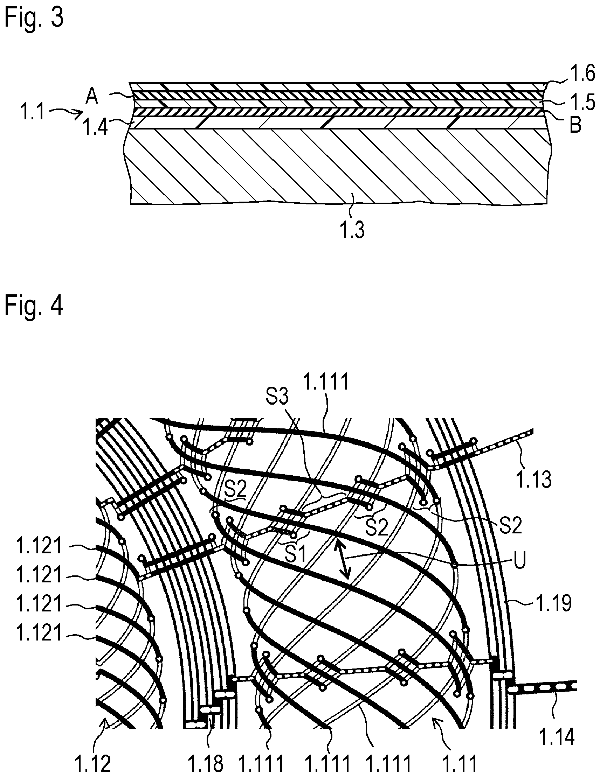

Das Abtastelement 1 umfasst eine Leiterplatte 1.1, welche gemäß der Figur 3 mehrere Lagen A, B, hier genau zwei Lagen A, B aufweist. Im vorgestellten Ausführungsbeispiel ist die Leiterplatte 1.1 sehr dünn ausgestaltet mit einer Dicke von ca. 100 µm, weshalb hier auch von einer Folie gesprochen werden kann. Die Leiterplatte 1.1 ist zur mechanischen Verstärkung hier auf ein vergleichsweise dickes Substrat 1.3 aufgebracht, das insbesondere aus einem metallischen Werkstoff bestehen kann. Auf diesem Substrat 1.3 ist eine elektrisch isolierende Schicht 1.4 in einer Stärke von etwa 50 µm angeordnet, auf der die zweite Lage B aufgebracht ist. Eine weitere etwa 15 µm dicke isolierende Schicht 1.5 befindet sich zwischen der zweiten Lage B und der ersten Lage A. Schließlich befindet sich auf der Lage A eine isolierende Schicht 1.6, die auch etwa 15 µm dick ist. Die beiden Lagen A, B sind jeweils ca. 12 µm stark. Die isolierenden Schichten 1.4,1.5, 1.6 sind im vorgestellten Ausführungsbeispiel aus Polyimid. Das Abtastelement 1 dient zur Abtastung des Skalenelements 2.

Die Leiterplatte 1.1 umfasst eine erste (innere) Erregerleiterbahn 1.18 und eine zweite Erregerleiterbahn 1.19. Die Erregerleiterbahnen 1.18, 1.19 verlaufen in der ersten Lage A und in der zweiten Lage B.

Zur Bestimmung der Winkelinformationen sind auf der Leiterplatte 1.1 eine erste Empfängerspur 1.11 und eine zweite Empfängerspur 1.12 angeordnet. Die Erregerleiterbahnen 1.18, 1.19 umschließen die zweite Empfängerspur 1.12 beziehungsweise die erste Empfängerspur 1.11 und verlaufen entlang der Messrichtung U beziehungsweise entlang der Umfangsrichtung.

Jede der Empfängerspuren 1.11, 1.12 umfasst im vorgestellten Ausführungsbeispiel jeweils Empfängerleiterbahnen 1.111, 1.121 (siehe etwa die Figur 4), die in Umfangsrichtung versetzt angeordnet sind, so dass diese dem Versatz entsprechend vier phasenverschobene Signale liefern können. In den Figuren sind diejenigen Empfängerleiterbahnen 1.111, 1.121, welche ein und derselben Empfängerspur 1.11, 1.12 angehören, mit nur einem Bezugszeichen versehen. Folglich sind also beispielsweise alle Empfängerleiterbahnen 1.111 der ersten Empfängerspur 1.11 mit nur einem Bezugszeichen versehen. Zudem verlaufen die ersten Empfängerleiterbahnen 1.111 der ersten Empfängerspur 1.11 mit Vias verbunden in den unterschiedlichen Lagen A, B der Leiterplatte 1.1, so dass an Kreuzungspunkten unerwünschte Kurzschlüsse vermieden werden. Das Gleiche gilt auch für die Empfängerleiterbahnen 1.121 der zweiten Empfängerspur 1.12. Wenngleich genau genommen jede der ersten und zweiten Empfängerleiterbahnen 1.111, 1.121 aus vielen Leiterstücken besteht, die jeweils auf zwei Ebenen beziehungsweise Lagen A, B verteilt und aneinandergereiht sind, wird im Folgenden eine derartige Struktur zusammenfassend als eine Empfängerleiterbahn 1.111, 1.121 bezeichnet. In den Figu-ren 4 bis 9 sind die Leiterbahnen in den Bereichen, in denen Leiterbahnen nur in der ersten Lage A verlaufen schwarz dargestellt. Zudem sind Leiterbahnen in den Bereichen, in denen Leiterbahnen nur in der zweiten Lage B verlaufen in Weiß mit schwarzer Randlinie dargestellt. Schließlich sind Leiterbahnen in den Bereichen, in denen Leiterbahnen übereinander in der ersten Lage A und in der zweiten Lage B verlaufen, schwarz-weiß gestrichelt gezeigt.

Die Empfängerleiterbahnen 1.111, 1.121 weisen einen räumlich periodischen Verlauf auf, der im Wesentlichen sinusförmig beziehungsweise sinusartig ausgestaltet ist. Die Empfängerleiterbahnen 1.111 der ersten Empfängerspur 1.11 weisen eine Periodenlänge λ1 (Figur 1) auf, während die Empfängerleiterbahnen 1.121 der zweiten Empfängerspur 1.12 eine Periodenlänge λ2 aufweisen. Im vorgestellten Ausführungsbeispiel sind innerhalb einer Empfängerspur 1.11, 1.12 benachbarte Empfängerleiterbahnen 1.111, 1.121 um 1/8 der vollen Sinusperiode (um π/4 oder 45° entlang der Umfangsrichtung oder Messrichtung U) zueinander versetzt angeordnet. Die Empfängerleiterbahnen 1.111, 1.121 sind elektrisch so verschaltet, dass diese zum einen 0° und 90°-Signale liefern und zum anderen 45° und 135°-Signale. Aus den 0° und 90°-Signalen kann ein erstes Positionssignal bestimmt werden und aus den 45° und 135°-Signalen kann ein bezüglich des ersten Positionssignals redundantes zweites Positionssignal bestimmt werden.

Im vorgestellten Ausführungsbeispiel ist die zweite Periodenlänge λ2 kleiner als die erste Periodenlänge λ1 (λ2/λ1 = 7/8).

Das Abtastelement 1 weist eine elektronische Schaltung mit einer Vielzahl von elektronischen Bausteinen 1.2 auf, die in der Figur 1 nur schematisch dargestellt sind. Die elektronische Schaltung umfasst im vorgestellten Ausführungsbeispiel auch einen ASIC-Baustein.

Die von der zweiten Empfängerspur 1.12 empfangenen Signale müssen zur elektronischen Schaltung, insbesondere zu einem Bereich, der als Auswerteschaltung dient, geführt werden. Zu diesem Zweck befinden sich auf der Leiterplatte vier Anschlussleitungen 1.13, welche jeweils einen ersten Leiterzug 1.131 und einen zweiten Leiterzug 1.132 aufweisen.

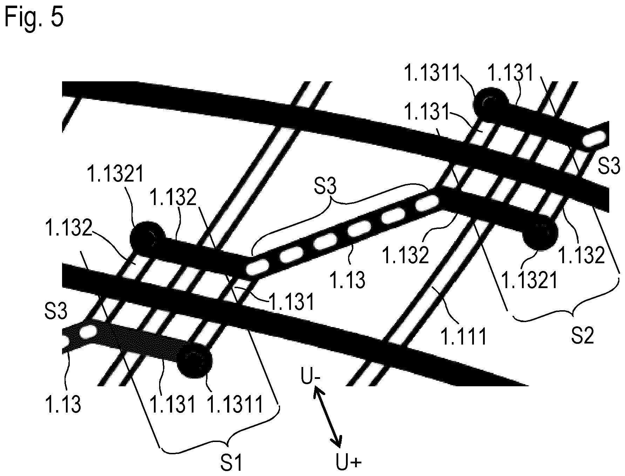

Der erste Leiterzug 1.131 (Figur 5) ist an einem ersten Punkt, zum Beispiel an einem ersten Ende der zweiten Empfängerleiterbahn 1.121 (Figur 4), mit der zweiten Empfängerleiterbahn 1.121 elektrisch verbunden beziehungsweise kontaktiert. Dieser erste Punkt befindet sich in der ersten Lage A der Leiterplatte 1.1. Zudem ist der zweite Leiterzug 1.132 an einem anderen zweiten Punkt, zum Beispiel an einem zweiten Ende der zweiten Empfängerleiterbahn 1.121, mit der zweiten Empfängerleiterbahn 1.121 elektrisch verbunden beziehungsweise kontaktiert. Dieser andere zweite Punkt befindet sich in der zweiten Lage B der Leiterplatte 1.1, wobei im vorgestellten Ausführungsbeispiel der erste Punkt des ersten Leiterzugs 1.131 und der andere zweite Punkt des zweiten Leiterzugs 1.132 übereinander im Schichtaufbau der Leiterplatte 1.1 liegen. Durch diese Art der Kontaktierung können empfangene Signale in Form von elektrischer Spannung an den Enden der Empfängerleiterbahn 1.121 abgegriffen werden.

Damit die erste Erregerleiterbahn 1.18 mit dem Erregerstrom versorgt werden kann, weist die Leiterplatte 1.1 zudem eine weitere Anschlussleitung 1.14 auf, die ebenfalls einen ersten Leiterzug 1.141 und einen zweiten Leiterzug 1.142 umfasst. Der erste Leiterzug 1.141 ist an einem dritten Punkt, zum Beispiel an einem ersten Ende der ersten Erregerleiterbahn 1.18, mit der ersten Erregerleiterbahn 1.18 elektrisch verbunden beziehungsweise kontaktiert. Dieser dritte Punkt befindet sich in der ersten Lage A der Leiterplatte 1.1. Zudem ist der zweite Leiterzug 1.142 an einem anderen vierten Punkt, zum Beispiel an einem zweiten Ende der ersten Erregerleiterbahn 1.18 mit der ersten Erregerleiterbahn 1.18 elektrisch verbunden beziehungsweise kontaktiert. Dieser andere vierte Punkt befindet sich in der zweiten Lage B der Leiterplatte 1.1, wobei im vorgestellten Ausführungsbeispiel der dritte Punkt des ersten Leiterzugs 1.141 und der andere vierte Punkt des zweiten Leiterzugs 1.142 übereinander liegen. Mit dieser Konfiguration wird die erste Erregerleiterbahn 1.18 mit dem Erregerstrom versorgt.

Die Leiterplatte 1.1 ist so ausgestaltet, dass die Anschlussleitungen 1.13, 1.14 die erste Empfängerspur 1.11 kreuzen. In diesem Zusammenhang ist es wichtig, dass durch die Anschlussleitung 1.13 zur zweiten Empfängerspur 1.12 möglichst keine störende Signale eingefangen werden, die beim Kreuzen der ersten Empfängerspur 1.11 aufgenommen werden könnten. Ebenso soll vermieden werden, dass die Erregerströme für die erste Erregerleiterbahn 1.18, die durch die Anschlussleitung 1.14 fließen, signifikante Störungen in der ersten Empfängerspur 1.11 hervorrufen.

Daher ist der Verlauf der Anschlussleitung 1.13 so ausgestaltet, dass gemäß der Figur 5 in einem ersten Abschnitt S1 der erste Leiterzug 1.131 und der zweite Leiterzug 1.132 so verlaufen, dass der erste Leiterzug 1.131 in positiver Messrichtung U+ versetzt zum zweiten Leiterzug 1.132 angeordnet ist. Zudem ist in einem zweiten Abschnitt S2 der Anschlussleitung 1.13 der zweite Leiterzug 1.132 in positiver Messrichtung U+ versetzt zum ersten Leiterzug 1.131 angeordnet. Im vorgestellten Ausführungsbeispiel sind überdies in dritten Abschnitten S3 der Anschlussleitung 1.13 der erste Leiterzug 1.131 und der zweite Leiterzug 1.132in der ersten Lage A und in der zweiten Lage B übereinander verlaufend angeordnet. Die Leiterzüge 1.131, 1.132 verlaufen also jeweils abschnittsweise in der ersten Lage A und abschnittsweise in der zweiten Lage B. Der Wechsel zwischen den Lagen A, B wird beim ersten Leiterzug 1.131 durch Vias 1.1311 vorgenommen und beim zweiten Leiterzug 1.132 durch Vias 1.1321.

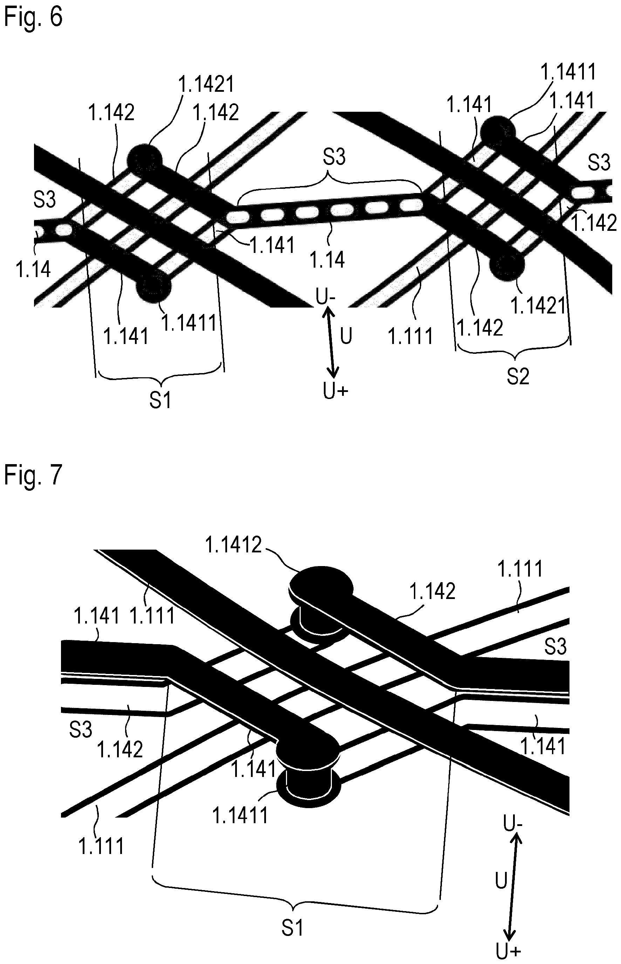

Anhand der Figur 6 kann der Verlauf der Anschlussleitung 1.14, die dem Anschluss der ersten Erregerleiterbahn 1.18 dient, erläutert werden. Auch hier verlaufen in einem ersten Abschnitt S1 der erste Leiterzug 1.141 und der zweite Leiterzug 1.142 so, dass der erste Leiterzug 1.141 in positiver Messrichtung U+ versetzt zum zweiten Leiterzug 1.142 angeordnet ist. Zudem ist in einem zweiten Abschnitt S2 der Anschlussleitung 1.14 der zweite Leiterzug 1.142 in positiver Messrichtung U+ versetzt zum ersten Leiterzug 1.141 angeordnet. Im vorgestellten Ausführungsbeispiel sind überdies in dritten Abschnitten S3 der Anschlussleitung 1.14 der erste Leiterzug 1.141 und der zweite Leiterzug 1.142in der ersten Lage A und in der zweiten Lage B übereinander verlaufend angeordnet. Das heißt, dass der erste Leiterzug 1.141 und der zweite Leiterzug 1.142 in einer Richtung orthogonal zur Leiterplatte 1.1 übereinander verlaufend angeordnet sind. Die dritten Abschnitte S3 erstrecken sich in Summe über den größten Anteil der Länge der Anschlussleitung 1.14.

Zur räumlichen Darstellung der Verläufe des ersten und zweiten Leiterzugs 1.141, 1.142 kann die Figur 7 herangezogen werden. Von links in dieser Figur kommend verlaufen in einem Abschnitt S3 zunächst der erste Leiterzug 1.141 in der ersten Lage A der Leiterplatte 1.1 und der zweite Leiterzug 1.142 in der zweiten Lage B übereinander. Diese an sich störungsunanfällige Anordnung kann im weiteren Verlauf nicht aufrechterhalten werden, weil die Anschlussleitung 1.14 die erste Empfängerspur 1.11 kreuzen muss. Es werden daher die Verläufe des ersten und des zweiten Leiterzugs 1.141, 1.142 zunächst so geändert, dass diese in beiden Lagen A, B entlang einer Teilstrecke parallel zu den ersten Empfängerleiterbahnen 1.111 in derselben Lage A, B ausgerichtet sind. In dieser Teilstrecke kreuzt der erste Leiterzug 1.141 in der ersten Lage A eine erste Empfängerleiterbahn 1.111, die dort in der zweiten Lage B verläuft. Zudem kreuzt der in der zweiten Lage B verlaufende zweite Leiterzug 1.142 eine erste Empfängerleiterbahn 1.111, die dort in der ersten Lage A verläuft. Die ersten und zweiten Leiterzüge 1.141, 1.142 verlaufen in diesen Teilstrecken bis zu Vias 1.1411, 1.1412, wo die ersten und zweiten Leiterzüge 1.141, 1.142 dann von der ersten Lage A auf die zweite Lage B der Leiterplatte 1.1 wechseln oder umgekehrt. Darauffolgend, in der Figur 7 weiter nach rechts verlaufend, sind der erste und zweite Leiterzug 1.141, 1.142 wieder parallel zur jeweiligen ersten Empfängerleiterbahn 1.111 orientiert, wobei sich die Parallelität auf jeweils die erste Empfängerleiterbahn 1.111 in der jeweils selben Lage A, B bezieht, in der auch der erste und zweite Leiterzug 1.141, 1.142 verläuft. Schließlich treten der erste und zweite Leiterzug 1.141, 1.142 wieder in einem dritten Abschnitt S3 ein, wo diese übereinanderliegend angeordnet sind.

In der Figur 2 ist das Skalenelement 2, das eine scheibenförmige Gestalt aufweist, in einer Draufsicht gezeigt. Das Skalenelement 2 besteht aus einem Träger, welches im dargestellten Ausführungsbeispiel aus Epoxydharz hergestellt ist, und auf dem zwei Teilungsspuren 2.1, 2.2 angeordnet sind. Die Teilungsspuren 2.1, 2.2 sind ringförmig ausgebildet und bezüglich der Achse R konzentrisch mit unterschiedlichem Durchmesser auf dem Träger angeordnet. Die Teilungsspuren 2.1, 2.2 umfassen Teilungsstrukturen bestehend aus jeweils einer periodischen Abfolge von alternierend angeordneten elektrisch leitfähigen Teilungsbereichen 2.11, 2.21 und nichtleitfähigen Teilungsbereichen 2.12, 2.22. Als Material für die elektrisch leitfähigen Teilungsbereiche 2.11, 2.21 wurde im gezeigten Beispiel Kupfer auf dem Träger aufgebracht. In den nichtleitfähigen Teilungsbereichen 2.12, 2.22 wurde der Träger dagegen nicht beschichtet. Durch die Anordnung mit zwei Teilungsspuren 2.1, 2.2 kann die Winkelposition des Skalenelements 2 jeweils absolut bestimmt werden. Die äußerste Teilungsspur 2.1 des Skalenelements 2 weist die größere Anzahl von Teilungsbereichen 2.11, 2.12 entlang einer Umfangslinie auf, so dass durch diese die größte Auflösung bezüglich der Messung der Winkelposition erzielbar ist.

Im zusammengebauten Zustand stehen sich das Abtastelement 1 und das Skalenelement 2 mit axialem Abstand beziehungsweise Luftspalt gegenüber, so dass bei einer Relativdrehung zwischen dem Skalenelement 2 und dem Abtastelement 1 in den Empfängerleiterbahnen 1.111, 1.121 jeweils ein von der jeweiligen Winkelposition abhängiges Signal durch Induktionseffekte erzeugbar ist. Voraussetzung für die Bildung von entsprechenden Signalen ist, dass die Erregerleiterbahnen 1.18, 1.19 ein zeitlich wechselndes elektromagnetisches Erregerfeld im Bereich der jeweilig abgetasteten Teilungsstrukturen erzeugen. Im dargestellten Ausführungsbeispiel sind die Erregerleiterbahnen 1.18, 1.19 als mehrere planar-parallele stromdurchflossene Einzel-Leiterbahnen ausgebildet. Die elektronische Schaltung des Abtastelements 1 arbeitet nicht nur als Auswerteelement, sondern auch als Erregerkontrollelement, unter dessen Kontrolle der Erregerstrom generiert beziehungsweise erzeugt wird, welcher dann durch die Erregerleiterbahnen 1.18, 1.19 fließt. Somit werden die Erregerleiterbahnen 1.18, 1.19 durch ein und dasselbe Erregerkontrollelement über die Anschlussleitung 1.14 bestromt. Dabei sind die erste Erregerleiterbahn 1.18 und die zweite Erregerleiterbahn 1.19 elektrisch in Serie geschaltet.

Werden die Erregerleiterbahnen 1.18, 1.19 bestromt, so bildet sich um diese ein schlauch- bzw. zylinderförmig orientiertes elektromagnetisches Feld aus. Die Feldlinien des resultierenden elektromagnetischen Feldes verlaufen um die Erregerleiterbahnen 1.18, 1.19, wobei die Richtung der Feldlinien in bekannter Art und Weise von der Stromrichtung in den Erregerleiterbahnen 1.18, 1.19 abhängt. Im Bereich der leitfähigen Teilbereiche 2.11, 2.21 werden Wirbelströme induziert, so dass jeweils eine von der Winkelposition abhängige Modulation des Feldes erreicht wird. Entsprechend kann durch die Empfängerspuren 1.11, 1.12 jeweils die relative Winkelposition gemessen werden. Die Empfängerleiterbahnen 1.111, 1.121 sind innerhalb ihrer Empfängerspur 1.11, 1.12 so angeordnet, dass diese jeweils um 90° phasenversetzte Signale liefern, so dass auch eine Bestimmung der Drehrichtung vorgenommen werden kann. Die Signale, die von den Empfängerspuren 1.11, 1.12 erzeugt werden, werden durch eine Auswerteschaltung weiterverarbeitet.

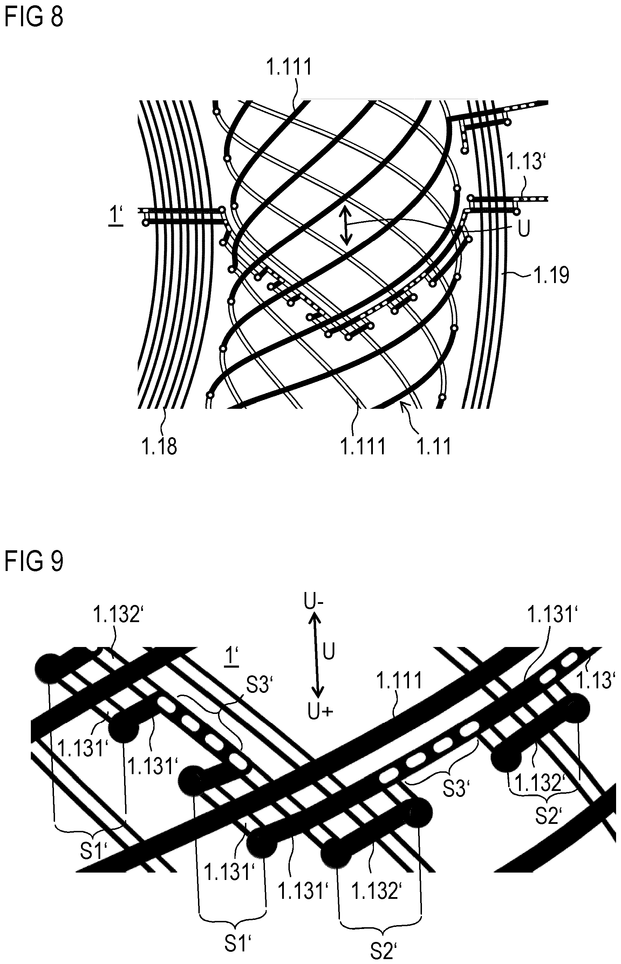

Anhand der Figuren 8 und 9 wird ein zweites Ausführungsbeispiel beschrieben. Die Figuren 8 und 9 zeigen eine Anschlussleitung 1.13' umfassend einen ersten Leiterzug 1.131' und einen zweiten Leiterzug 1.132', wobei der erste Leiterzug 1.131` an einem Punkt mit der zweiten Empfängerleiterbahn 1.121 und der zweite Leiterzug 1.132' an einem anderen Punkt mit der zweiten Empfängerleiterbahn 1.121 elektrisch verbunden ist. Zudem umfasst das Abtastelement 1' gemäß dem zweiten Ausführungsbeispiel auch eine weitere Anschlussleitung zur Erregerleiterbahn 1.18, diese Anschlussleitung ist in den Figuren nicht gezeigt.

Der erste Leiterzug 1.131' und der zweite Leiterzug 1.132' verlaufen so, dass in mehreren ersten Abschnitten S1' (hier drei) der Anschlussleitung 1.13' der erste Leiterzug 1.131' in positiver Messrichtung U+ versetzt zum zweiten Leiterzug 1.132' angeordnet ist. Im vorgestellten zweiten Ausführungsbeispiel befinden sich die ersten Abschnitte S1' im Verlauf der Anschlussleitung 1.13' benachbart zueinander. Ebenso ist in mehreren zweiten Abschnitten S2' der Anschlussleitung 1.13' der zweite Leiterzug1.132' in positiver Messrichtung U+ versetzt zum ersten Leiterzug 1.131' angeordnet, wobei hier die zweiten Abschnitte S2' benachbart zueinander angeordnet sind. Demnach liegt also hier zwischen zwei ersten Abschnitten S1' ein dritter Abschnitt S3`, in welchem die Leiterzüge 1.131', 1.132' übereinander liegen. Ebenso befindet sich im zweiten Ausführungsbeispiel ein dritter Abschnitt S3' zwischen zwei zweiten Abschnitten S2`.

Durch die Abtastelemente 1; 1' gemäß den vorgestellten Ausführungsbeispielen ist es möglich die Messgenauigkeit der Positionsmesseinrichtung zu erhöhen, weil einerseits keine Lücken in einer Empfängerspur erforderlich sind und andererseits durch die Gestaltung der Anschlussleiterbahnen 1.13, 1.14, 1.13` Störungen in den Messsignalen vernachlässigbar klein sind.

## Patentansprüche

1. Abtastelement (1; 1') für eine induktive Positionsmesseinrichtung zur Messung einer Position entlang einer Messrichtung (U), das eine Leiterplatte (1.1; 1.1') umfasst, wobei die Leiterplatte (1.1; 1.1')
¬ eine erste Lage (A) und eine zweite Lage (B) aufweist,
¬ eine erste Empfängerspur (1.11) aufweist, die eine erste Empfängerleiterbahn (1.111) umfasst, und
¬ eine Anschlussleitung (1.13; 1.13', 1.14) aufweist, welche einen ersten Leiterzug (1.131; 1.131', 1.141) und einen zweiten Leiterzug (1.132; 1.132', 1.142) umfasst, wobei die Anschlussleitung (1.13; 1.13', 1.14) die erste Empfängerspur (1.11) kreuzt, wobei die Leiterplatte (1.1; 1.1') weiterhin
a) eine zweite Empfängerspur (1.12) aufweist, die eine zweite Empfängerleiterbahn (1.121) umfasst, wobei der erste Leiterzug (1.131; 1.131') an einem Punkt mit der zweiten Empfängerleiterbahn (1.121) und der zweite Leiterzug (1.132; 1.132') an einem anderen Punkt mit der zweiten Empfängerleiterbahn (1.121) elektrisch verbunden ist, oder
b) eine erste Erregerleiterbahn (1.18) aufweist, wobei der erste Leiterzug (1.141) an einem Punkt mit der ersten Erregerleiterbahn (1.18) und der zweite Leiterzug (1.142) an einem anderen Punkt mit der ersten Erregerleiterbahn (1.18) elektrisch verbunden ist, wobei
der erste Leiterzug (1.131; 1.131', 1.141) und der zweite Leiterzug (1.132; 1.132', 1.142) so verlaufen, dass
¬ in zumindest einem ersten Abschnitt (S1; S1') der Anschlussleitung (1.13; 1.13', 1.14) der erste Leiterzug (1.131; 1.131', 1.141) in positiver Messrichtung (U+) versetzt zum zweiten Leiterzug (1.132; 1.132', 1.142) angeordnet ist und
¬ in zumindest einem zweiten Abschnitt (S2; S2') der Anschlussleitung (1.13; 1.13', 1.14) der zweite Leiterzug (1.132; 1.132', 1.142) in positiver Messrichtung (U+) versetzt zum ersten Leiterzug (1.131; 1.131', 1.141) angeordnet ist.

2. Abtastelement (1; 1') gemäß dem Anspruch 1, wobei die erste Empfängerleiterbahn (1.111) im ersten Abschnitt (S1; S1') und / oder im zweiten Abschnitt (S2; S2') streckenweise parallel zum ersten Leiterzug (1.131; 1.131', 1.141) und / oder zum zweiten Leiterzug (1.132; 1.132', 1.142) verläuft.

3. Abtastelement (1; 1') gemäß einem der vorhergehenden Ansprüche, wobei in zumindest einem dritten Abschnitt (S3) der Anschlussleitung (1.13; 1.13', 1.14) der erste Leiterzug (1.131; 1.131', 1.141) in der ersten Lage (A) und der zweite Leiterzug (1.132; 1.132', 1.142) in der zweiten Lage (B) übereinander verlaufend angeordnet sind.

4. Abtastelement (1; 1') gemäß einem der vorhergehenden Ansprüche, wobei im ersten Abschnitt (S1; S1') und / oder im zweiten Abschnitt (S2; S2') der erste Leiterzug (1.131; 1.131', 1.141) und der zweite Leiterzug (1.132; 1.132', 1.142) streckenweise parallel verlaufen.

5. Abtastelement (1) gemäß dem Anspruch 4, wobei die erste Empfängerleiterbahn (1.111) zwischen den parallel verlaufenden ersten und zweiten Leiterzügen (1.131, 1.141, 1.132, 1.142) in derselben Lage (A, B) wie die Leiterzüge (1.131, 1.141; 1.132, 1.142) verläuft.

6. Abtastelement (1; 1') gemäß einem der vorhergehenden Ansprüche, wobei die Verläufe sowohl des ersten Leiterzugs (1.131; 1.131', 1.141) als auch des zweiten Leiterzugs (1.132; 1.132', 1.142) im ersten Abschnitt (S1; S1') und / oder im zweiten Abschnitt (S2; S2') von der ersten Lage (A) auf die zweite Lage (B) wechseln.

7. Abtastelement (1; 1') gemäß einem der vorhergehenden Ansprüche, wobei entlang einer Teilstrecke im ersten Abschnitt (S1; S1')
¬ der erste Leiterzug (1.131; 1.131', 1.141) in der ersten Lage (A) verläuft und
¬ die erste Empfängerleiterbahn (1.111) ebenfalls in der ersten Lage (A) verläuft, wobei
in dieser Teilstrecke der erste Leiterzug (1.131; 1.131', 1.141) parallel zur ersten Empfängerleiterbahn (1.111) verläuft.

8. Abtastelement (1; 1') gemäß dem Anspruch 7, wobei die erste Empfängerspur (1.11) eine weitere erste Empfängerleiterbahn (1.111) umfasst, die im ersten Abschnitt (S1; S1') in der zweiten Lage (B) verläuft, wobei der erste Leiterzug (1.131; 1.131', 1.141) die weitere erste Empfängerleiterbahn (1.111) in der Teilstrecke kreuzt.

9. Abtastelement (1; 1') gemäß einem der vorhergehenden Ansprüche, wobei die Leiterplatte (1.1; 1.1') genau zwei Lagen (A, B) aufweist.

10. Abtastelement (1; 1') gemäß einem der vorhergehenden Ansprüche, wobei die Leiterplatte (1.1; 1.1')
a) eine zweite Empfängerspur (1.12) aufweist, die eine zweite Empfängerleiterbahn (1.121) umfasst, wobei der erste Leiterzug (1.131; 1.131') in der ersten Lage (A) an einem Punkt mit der zweiten Empfängerleiterbahn (1.121) elektrisch verbunden ist und der zweite Leiterzug (1.132; 1.132') an einem anderen Punkt in der zweiten Lage (B) mit der zweiten Empfängerleiterbahn (1.121) elektrisch verbunden ist, oder
b) eine erste Erregerleiterbahn (1.18) aufweist, wobei der erste Leiterzug (1.141) in der ersten Lage (A) an einem Punkt mit der ersten Erregerleiterbahn (1.18) elektrisch verbunden ist und der zweite Leiterzug (1.142) an einem anderen Punkt in der zweiten Lage (B) mit der ersten Erregerleiterbahn (1.18) elektrisch verbunden ist.

11. Abtastelement (1; 1') gemäß einem der vorhergehenden Ansprüche, wobei das Abtastelement (1; 1') ein Substrat (1.3) aufweist, auf dem die Leiterplatte (1.1; 1.1') angeordnet ist.

12. Abtastelement (1; 1') gemäß dem Anspruch 11, wobei das Substrat (1.3) aus einem metallischen Werkstoff ist.

13. Abtastelement (1; 1') gemäß einem der vorhergehenden Ansprüche, wobei die erste Empfängerspur (1.11) und die zweite Empfängerspur (1.12) um eine Achse (R) gekrümmt angeordnet sind, wobei die erste Empfängerspur (1.11) bezüglich der Achse (R) radial außen relativ zur zweiten Empfängerspur (1.12) angeordnet ist.

14. Abtastelement (1; 1') gemäß dem Anspruch 13, wobei die erste Empfängerspur (1.11) lückenlos über 360° um die Achse (R) umlaufend angeordnet ist.

15. Induktive Positionsmesseinrichtung umfassend ein Abtastelement (1; 1') gemäß einem der vorhergehenden Ansprüche sowie einem Skalenelement (2), wobei das Skalenelement (2) in einer Richtung, die orthogonal zur Messrichtung (U) orientiert ist, beabstandet zur Leiterplatte (1.1; 1.1') angeordnet ist.

## Claims

1. Scanning element (1; 1') for an inductive position measuring device for measuring a position along a measuring direction (U), the scanning element comprising a printed circuit board (1.1; 1.1'), wherein the printed circuit board (1.1; 1.1')
¬ has a first layer (A) and a second layer (B),
¬ has a first receiver track (1.11) comprising a first receiver conductor path (1.111), and
¬ has a connecting line (1.13; 1.13', 1.14) comprising a first conductor trace (1.131; 1.131', 1.141) and a second conductor trace (1.132; 1.132', 1.142), wherein the connecting line (1.13; 1.13', 1.14) crosses the first receiver track (1.11), wherein the printed circuit board (1.1; 1.1') furthermore
a) has a second receiver track (1.12) comprising a second receiver conductor path (1.121), wherein the first conductor trace (1.131; 1.131') is electrically connected to the second receiver conductor path (1.121) at one point and the second conductor trace (1.132; 1.132') is electrically connected to the second receiver conductor path (1.121) at another point, or
b) has a first excitation conductor path (1.18), wherein the first conductor trace (1.141) is electrically connected to the first excitation conductor path (1.18) at one point and the second conductor trace (1.142) is electrically connected to the first excitation conductor path (1.18) at another point, wherein
the first conductor trace (1.131; 1.131', 1.141) and the second conductor trace (1.132; 1.132', 1.142) run in such a way that
¬ in at least one first section (S1; S1') of the connecting line (1.13; 1.13', 1.14), the first conductor trace (1.131; 1.131', 1.141) is arranged offset with respect to the second conductor trace (1.132; 1.132', 1.142) in the positive measuring direction (U+) and
¬ in at least one second section (S2; S2') of the connecting line (1.13; 1.13', 1.14), the second conductor trace (1.132; 1.132', 1.142) is arranged offset with respect to the first conductor trace (1.131; 1.131', 1.141) in the positive measuring direction (U+).

2. Scanning element (1; 1') according to Claim 1, wherein the first receiver conductor path (1.111), in the first section (S1; S1') and/or in the second section (S2; S2'), in some portions runs parallel to the first conductor trace (1.131; 1.131', 1.141) and/or to the second conductor trace (1.132; 1.132', 1.142).

3. Scanning element (1; 1') according to either of the preceding claims, wherein in at least one third section (S3) of the connecting line (1.13; 1.13', 1.14), the first conductor trace (1.131; 1.131', 1.141) in the first layer (A) and the second conductor trace (1.132; 1.132', 1.142) in the second layer (B) are arranged in a manner running one above the other.

4. Scanning element (1; 1') according to any of the preceding claims, wherein in the first section (S1; S1') and/or in the second section (S2; S2'), the first conductor trace (1.131; 1.131', 1.141) and the second conductor trace (1.132; 1.132', 1.142) run parallel in some portions.

5. Scanning element (1) according to Claim 4, wherein the first receiver conductor path (1.111), between the first and second conductor traces (1.131, 1.141, 1.132, 1.142) running parallel, runs in the same layer (A, B) as the conductor traces (1.131, 1.141; 1.132, 1.142).

6. Scanning element (1; 1') according to any of the preceding claims, wherein the courses of both the first conductor trace (1.131; 1.131', 1.141) and the second conductor trace (1.132; 1.132', 1.142) in the first section (S1; S1') and/or in the second section (S2; S2') change from the first layer (A) to the second layer (B).

7. Scanning element (1; 1') according to any of the preceding claims, wherein along a sub-portion in the first section (S1; S1')
¬ the first conductor trace (1.131; 1.131', 1.141) runs in the first layer (A) and
¬ the first receiver conductor path (1.111) likewise runs in the first layer (A), wherein
in this sub-portion the first conductor trace (1.131; 1.131', 1.141) runs parallel to the first receiver conductor path (1.111).

8. Scanning element (1; 1') according to Claim 7, wherein the first receiver track (1.11) comprises a further first receiver conductor path (1.111) running in the first section (S1; S1') in the second layer (B), wherein the first conductor trace (1.131; 1.131', 1.141) crosses the further first receiver conductor path (1.111) in the sub-portion.

9. Scanning element (1; 1') according to any of the preceding claims, wherein the printed circuit board (1.1; 1.1') has exactly two layers (A, B).

10. Scanning element (1; 1') according to any of the preceding claims, wherein the printed circuit board (1.1; 1.1')
a) has a second receiver track (1.12) comprising a second receiver conductor path (1.121), wherein the first conductor trace (1.131; 1.131'), in the first layer (A), is electrically connected to the second receiver conductor path (1.121) at one point and the second conductor trace (1.132; 1.132') is electrically connected to the second receiver conductor path (1.121) at another point in the second layer (B), or
b) has a first excitation conductor path (1.18), wherein the first conductor trace (1.141), in the first layer (A), is electrically connected to the first excitation conductor path (1.18) at one point and the second conductor trace (1.142) is electrically connected to the first excitation conductor path (1.18) at another point in the second layer (B).

11. Scanning element (1; 1') according to any of the preceding claims, wherein the scanning element (1; 1') has a substrate (1.3), on which the printed circuit board (1.1; 1.1') is arranged.

12. Scanning element (1; 1') according to Claim 11, wherein the substrate (1.3) is composed of a metallic material.

13. Scanning element (1; 1') according to any of the preceding claims, wherein the first receiver track (1.11) and the second receiver track (1.12) are arranged in a manner curved around an axis (R), wherein the first receiver track (1.11) is arranged radially outwardly relative to the second receiver track (1.12) with respect to the axis (R).

14. Scanning element (1; 1') according to Claim 13, wherein the first receiver track (1.11) is arranged in a manner extending circumferentially around the axis (R) over 360° without any gaps.

15. Inductive position measuring device comprising a scanning element (1; 1') according to any of the preceding claims and also a scale element (2), wherein the scale element (2) is arranged spaced apart from the printed circuit board (1.1; 1.1') in a direction oriented orthogonally to the measuring direction (U).

## Revendications

1. Elément de balayage (1 ; 1') pour un dispositif de mesure de position inductif permettant de mesurer une position dans une direction de mesure (U), comprenant une carte de circuits imprimés (1.1 ; 1.1'), dans lequel la carte de circuits imprimés (1.1 ; 1.1') présente
- une première couche (A) et une deuxième couche (B),
- une premier tracé de réception (1.11) qui comprend une première piste conductrice réceptrice (1.111), et
- une ligne de connexion (1.13 ; 1.13', 1.14) qui comprend une première série de conducteurs (1.131 ; 1.131', 1.141) et une deuxième série de conducteurs (1.132 ; 1.132', 1.142), la ligne de connexion (1.13 ; 1.13', 1.14) croisant le premier tracé de réception (1.11),
dans lequel la carte de circuits imprimés (1.1 ; 1.1') présente en outre
a) un deuxième tracé de réception (1.12) qui comprend une deuxième piste conductrice réceptrice (1.121), la première série de conducteurs (1.131 ; 1.131') étant reliée électriquement en un point à la deuxième piste conductrice réceptrice (1.121) et la deuxième série de conducteurs (1.132 ; 1.132') étant reliée électriquement en un autre point à la deuxième piste conductrice réceptrice (1.121), ou
b) une première piste conductrice d'excitation (1.18), la première série de conducteurs (1.141) étant reliée électriquement en un point à la première piste conductrice d'excitation (1.18) et la deuxième série de conducteurs (1.142) étant reliée électriquement en un autre point à la première piste conductrice d'excitation (1.18), dans lequel
la première série de conducteurs (1.131 ; 1.131', 1.141) et la deuxième série de conducteurs (1.132 ; 1.132', 1.142) s'étendent de telle sorte que
- dans au moins une première partie (S1 ; S1') de la ligne de connexion (1.13 ; 1.13', 1.14), la première série de conducteurs (1.131 ; 1.131', 1.141) est disposée de manière décalée par rapport à la deuxième série de conducteurs (1.132 ; 1.132', 1.142) dans la direction de mesure positive (U+), et
- dans au moins une deuxième partie (S2 ; S2') de la ligne de connexion (1.13 ; 1.13', 1.14), la deuxième série de conducteurs (1.132 ; 1.132', 1.142) est disposée de manière décalée par rapport à la première série de conducteurs (1.131 ; 1.131', 1.141) dans la direction de mesure positive (U+).

2. Elément de balayage (1 ; 1') selon la revendication 1, dans lequel la première piste conductrice réceptrice (1.111) dans la première partie (S1 ; S1') et/ou dans la deuxième partie (S2 ; S2') s'étend par endroits en parallèle à la première série de conducteurs (1.131 ; 1.131', 1.141) et/ou à la deuxième série de conducteurs (1.132 ; 1.132', 1.142).

3. Elément de balayage (1 ; 1') selon l'une quelconque des revendications précédentes, dans lequel, dans au moins une troisième partie (S3) de la ligne de connexion (1.13 ; 1.13', 1.14), la première série de conducteurs (1.131 ; 1.131', 1.141) est disposée en s'étendant dans la première couche (A) et la deuxième série de conducteurs (1.132 ; 1.132', 1.142) est disposée en s'étendant dans la deuxième couche (B), l'une au-dessus de l'autre.

4. Elément de balayage (1 ; 1') selon l'une quelconque des revendications précédentes, dans lequel, dans la première partie (S1 ; S1') et/ou dans la deuxième partie (S2 ; S2'), la première série de conducteurs (1.131 ; 1.131', 1.141) et la deuxième série de conducteurs (1.132 ; 1.132', 1.142) s'étendent en parallèle par endroits.

5. Elément de balayage (1) selon la revendication 4, dans lequel la première piste conductrice réceptrice (1.111) s'étend entre la première et la deuxième série de conducteurs (1.131, 1.141, 1.132, 1.142) s'étendant en parallèle dans la même couche (A, B) que les séries de conducteurs (1.131, 1.141, 1.132, 1.142).

6. Elément de balayage (1 ; 1') selon l'une quelconque des revendications précédentes, dans lequel le cours à la fois de la première série de conducteurs (1.131 ; 1.131', 1.141) et de la deuxième série de conducteurs (1.132 ; 1.132', 1.142) passe dans la première partie (S1 ; S1') et/ou dans la deuxième partie (S2 ; S2') de la première couche (A) à la deuxième couche (B).

7. Elément de balayage (1 ; 1') selon l'une quelconque des revendications précédentes, dans lequel, le long d'un trajet partiel dans la première partie (S1 ; S1')
- la première série de conducteurs (1.131 ; 1.131', 1.141) s'étend dans la première couche (A), et
- la première piste conductrice réceptrice (1.111) s'étend également dans la première couche (A), dans lequel
sur ce trajet partiel, la première série de conducteurs (1.131 ; 1.131', 1.141) s'étend en parallèle à la première piste conductrice réceptrice (1.111).

8. Elément de balayage (1 ; 1') selon la revendication 7, dans lequel le premier tracé de réception (1.11) comprend une première piste conductrice réceptrice supplémentaire (1.111) qui s'étend dans la première partie (S1 ; S1') dans la deuxième couche (B), dans lequel la première série de conducteurs (1.131 ; 1.131', 1.141) croise la première piste conductrice réceptrice supplémentaire (1.111) sur le trajet partiel.

9. Elément de balayage (1 ; 1') selon l'une quelconque des revendications précédentes, dans lequel la carte de circuits imprimés (1.1 ; 1.1') présente exactement deux couches (A, B).

10. Elément de balayage (1 ; 1') selon l'une quelconque des revendications précédentes, dans lequel la carte de circuits imprimés (1.1 ; 1.1') présente
a) un deuxième tracé de réception (1.12) qui comprend une deuxième piste conductrice réceptrice (1.121), dans lequel la première série de conducteurs (1.131 ; 1.131') est reliée électriquement en un point dans la première couche (A) à la deuxième piste conductrice réceptrice (1.121), et la deuxième série de conducteurs (1.132 ; 1.132') est reliée électriquement en un autre point dans la deuxième couche (B) à la deuxième piste conductrice réceptrice (1.121), ou
b) une première piste conductrice d'excitation (1.18), dans lequel la première série de conducteurs (1.141) dans la première couche (A) est reliée électriquement en un point à la première piste conductrice d'excitation (1.18), et la deuxième série de conducteurs (1.142) est reliée électriquement en un autre point dans la deuxième couche (B) à la première piste conductrice d'excitation (1.18).

11. Elément de balayage (1 ; 1') selon l'une quelconque des revendications précédentes, dans lequel l'élément de balayage (1 ; 1') présente un substrat (1.3) sur lequel est disposée la carte de circuits imprimés (1.1 ; 1.1').

12. Elément de balayage (1 ; 1') selon la revendication 11, dans lequel le substrat (1.3) est composé d'un matériau métallique.

13. Elément de balayage (1 ; 1') selon l'une quelconque des revendications précédentes, dans lequel le premier tracé de réception (1.11) et le deuxième tracé de réception (1.12) sont disposés de manière courbe autour d'un axe (R), dans lequel le premier tracé de réception (1.11) est disposé concernant l'axe (R) radialement à l'extérieur par rapport au deuxième tracé de réception (1.12) .

14. Elément de balayage (1 ; 1') selon la revendication 13, dans lequel le premier tracé de réception (1.11) est disposé de manière périphérique autour de l'axe (R) sans interruption sur 360.

15. Dispositif de mesure de position inductif, comprenant un élément de balayage (1 ; 1') selon l'une quelconque des revendications précédentes ainsi qu'un élément de graduation (2), dans lequel l'élément de graduation (2) est disposé dans une direction qui est orientée de manière orthogonale à la direction de mesure (U), à distance de la carte de circuits imprimés (1.1 ; 1.1') .
